# FASCICULE DE BREVET EUROPEEN

(11) **EP 2 021 290 B1**
(45) Date de publication et mention de la délivrance du brevet: **17.02.2010**
(21) Numéro de dépôt: 07729129.2
(22) Date de dépôt: 15.05.2007
(51) Int. Cl.: C02F 3/34, C02F 103/22, C02F 103/32

(54) **COMPOSITION BACTERIENNE POUR LE TRAITEMENT DE BOUES CHARGEES EN MATIERE GRASSE ANIMALE.**
BAKTERIENZUSAMMENSETZUNG ZUR BEHANDLUNG VON TIERFETTE ENTHALTENDEM SCHLAMM
BACTERIAL COMPOSITION FOR THE TREATMENT OF SLUDGE CONTAINING ANIMAL FATS

(30) Priorité: 18.05.2006 FR 0604442
(43) Date de publication de la demande: 11.02.2009
(73) Titulaire: AKAENO SAS, 34590 Marsillargues (FR)
(72) Inventeur: GUELLIL, Abdelkader, 34070 Montpellier (FR)
(74) Mandataire: Ravina, Bernard
(86) Numéro de dépôt international: PCT/EP2007/054677
(87) Numéro de publication internationale: WO 2007/135018

(56) Documents cités:
- WO-A-99/28514
- FR-A1- 2 812 287

## Description

### Domaine technique de l'invention.

La présente invention concerne le domaine du traitement des déchets gras récupérés lors du traitement des eaux usées principalement caractérisé par les micro-organismes utilisés. Elle a pour objet une composition bactérienne pour le traitement de boues pâteuses chargées en matière grasse animale notamment, et un procédé de traitement de telles boues utilisant ladite composition bactérienne.

### Etat de la technique.

Parmi les industries de transformation, et notamment les industries alimentaires et/ou agro-alimentaires, certaines sont productrices de grande quantité de déchets gras d'origine animale ou analogue. Ces déchets gras se présentent notamment sous la forme de boues pâteuses fortement chargées en matière grasse, triglycérides plus particulièrement. De telles boues pâteuses se caractérisent par une viscosité importante, avec une concentration en graisses animales exprimée en MEH (Matière Extractible à l'Hexane) ou en SEC (Substance Extractibles au Chloroforme) de l'ordre comprise entre 10 000 mg/l et 100 000 mg/l et avec une Demande Chimique en Oxygène (DCO) de l'ordre de 50 000 mg/l à 500 000 mg/l. De tels lieux de production sont notamment des abattoirs et/ou des sites de production alimentaire. De tels lieux de concentration de déchets gras sous forme de boue pâteuse sont aussi susceptibles d'être des lieux d'épuration d'effluents relevant des collectivités territoriales.

De manière habituelle, les déchets gras produits sont accumulés dans un lieu de stockage, et sont régulièrement évacués vers des sites de valorisation ou de destruction, par incinération notamment. Dans le cas où les déchets gras sont traités en station d'épuration, les capacités et les performances de traitement offertes par de telles stations sont limitées à un traitement d'effluents plutôt liquides inadapté au traitement de boues pâteuses susvisées. Par exemple, il a été proposé par le document FR2812287 (AQUA TERRA ENVIRONNEMENT) un procédé de traitement d'effluents liquides mettant en oeuvre une composition bactérienne aérobie spécifique apte à éliminer au moins partiellement les déchets gras présents dans les effluents. La composition bactérienne est introduite dans une cuve de traitement d'un réacteur biologique équipé de moyens d'apport en oxygène, cette cuve de traitement étant en relation avec une cuve d'homogénéisation recevant les effluents. Le traitement s'effectue à partir d'une circulation en boucle entre les deux cuves des effluents chargés à environ 5 g/l de matières grasses. Il apparaît que si ce procédé s'avère efficace pour des effluents liquides de faible viscosité, présentant une concentration en graisse animale de l'ordre inférieure à 40 mg/l et une DCO de l'ordre comprise entre 2 000 mg/l à 3 000 mg/l, il est inadapté au traitement des boues pâteuses précédemment décrites.

### Objet de l'invention.

Le but de la présente invention est de proposer une composition bactérienne, ainsi qu'un procédé de mise en oeuvre de cette composition, qui soient aptes à traiter les matières grasses d'origine animale ou analogue présentes dans des boues pâteuses notamment issues de l'industrie agro-alimentaire. De telles boues pâteuses présentent une viscosité importante, avec une concentration de graisses animales de l'ordre comprise entre 10 000 mg/l et 100 000 mg/l et avec une Demande Chimique en Oxygène (DCO) de l'ordre de 50 000 mg/l à 500 000 mg/l. Secondairement, la présente invention vise aussi à proposer un procédé de traitement de telles boues pâteuses, qui soit simple et peu coûteux à mettre en oeuvre pour un rendement efficace d'élimination des matières grasses. L'efficacité du rendement recherché doit être compatible pour le traitement des graisses animales, tant crues que cuites, pour optimiser les applications possibles de l'invention. Secondairement encore, la présente invention vise à proposer une installation de traitement des boues dont l'organisation permette son implantation aisée sur le lieu de production des boues et son suivi de fonctionnement commode par un personnel spécialisé distinct du personnel relevant du site de production.
La composition bactérienne de l'invention est une composition bactérienne pour la dégradation de boues pâteuses fortement chargées en matières grasses d'origine animale ou analogue. Selon la présente invention, la composition bactérienne comporte une association de souches bactériennes comprenant au moins une souche du genre *Pseudomonas,* au moins une souche du genre *Shewanella,* au moins une souche du genre *Morganella,* au moins une souche du genre *Myroides* et au moins une souche du genre *Citrobacter.* Les souches bactériennes associées sont préférentiellement en proportion équivalente pondérée à plus ou moins 25%.

De préférence, ladite au moins une souche du genre *Pseudomonas* est plus particulièrement choisie parmi l'une des souches de l'espèce *Pseudomonas aeruginosa* et de l'espèce *Pseudomonas nitroreducens.* La ladite au moins une souche du genre *Shewanella* peut être choisie parmi l'une des souches de l'espèce *Shewanella putrefaciens.* La ladite au moins une souche du genre *Morganella* est choisie de préférence parmi l'une des souches de l'espèce *Morganella morganii.* La ladite au moins une souche du genre *Myroides* est choisie de préférence parmi l'une des souches de l'espèce *Myroides odoratus.* La ladite au moins une souche du genre *Citrobacter* est plus particulièrement une souche de l'espèce *Citrobacter freundii.*

Il est apparu qu'une telle composition bactérienne est apte à dégrader plus de 90% de la matière grasse animale présente dans les boues pâteuses, à partir de la mise en oeuvre par les souches bactériennes précédemment citées de réactions d'hydrolyse et de β-oxydation. Ces réactions produisent de l'eau et du dioxyde de carbone qui n'induisent pas de nuisances environnementales et qui permettent d'éliminer rapidement des corps gras en forte concentration sans rejet susceptible de porter atteinte à l'environnement. Les réactions d'hydrolyse et de β-oxydation obtenues à partir de la composition bactérienne de l'invention présentent des cinétiques suffisamment élevées pour permettre des temps de séjour courts des micro-organismes mêlés aux boues pâteuses, et avantageusement entretenus dans des conditions idoines de fonctionnement, sans que ces conditions n'induisent un développement inadapté de chacune des souches bactériennes associées. Typiquement, il est possible de traiter efficacement 1 m³ de boues pâteuses en 4 jours, pour une concentration de graisses animales comprise entre 10 000 mg/l et 150 000 mg/l et avec une DCO de l'ordre de 50 000 mg/l à 800 000 mg/l.

La composition bactérienne de la présente invention est avantageusement applicable au traitement de boues pâteuses chargées en matières grasses animales issues de l'industrie agro-alimentaire. Une telle application relève plus particulièrement du traitement de boues et/ou de masses de déchets gras produits par une structure industrielle exploitant des matériaux d'origine animale, tel qu'un abattoir et/ou une structure de production alimentaire. Il est apparu que la composition bactérienne de l'invention était très efficace pour des déchets gras tant crus que cuits. Dans le cadre d'une telle application, la composition proposée par la présente invention est avantageusement directement exploitée sur le site de production des boues.

La composition bactérienne de la présente invention est encore avantageusement applicable au traitement de boues pâteuses issues d'effluents produits par une collectivité territoriale. Une telle application relève plus particulièrement du traitement des boues primaires grasses retirées des effluents domestiques par les premières phases de traitement. Dans le cas d'une telle application, la composition proposée par la présente invention est notamment destinée à être exploitée par une station d'épuration d'eaux résiduaires urbaines ou une station collective de traitement de déchets, qui est susceptible d'être éloignée d'un lieu individuel de production. On comprendra que dans ce cas et sans déroger aux règles de l'invention énoncées, les effluents traités sont susceptibles de présenter une densité en matières grasses animales largement inférieure à celle pour laquelle la composition de la présente invention est préférentiellement destinée. Selon la présente invention, un procédé de traitement de boues pâteuses chargées en matières grasses animales consiste préférentiellement à réaliser successivement les étapes suivantes :
- acheminer les boues pâteuses, telles qu'elles se présentent communément à l'entrée l'une station d'épuration, vers la cuve d'un bioréacteur contenant la composition bactérienne selon l'invention,
- filtrer les boues pâteuses pour séparer les déchets gras à traiter d'autres corps indésirables. De tels corps sont susceptibles d'être des matériaux ne relevant pas de la nature des déchets gras à traiter, matériaux inertes par exemple, ou encore d'être des corps gras dont le volume est trop important à ce stade d'exécution du procédé pour être traités par la mise en oeuvre des étapes suivantes. De tels corps gras, d'une dimension supérieure à celle du filtre sont destinés soit à être traités pour être amenés à une dimension acceptable de traitement par le procédé de l'invention, soit à être traités voire éliminés par une quelconque autre méthode. Cette opération de filtration est susceptible d'être réalisée au moyen d'un tamis rotatif ou appareil de filtration analogue. A titre indicatif, le maillage du tamis est de l'ordre compris entre 250 microns et 1 millimètre.
- maintenir à l'intérieur de la cuve du bioréacteur une homogénéisation et une oxygénation du milieu.
- maintenir à l'intérieur de la cuve du bioréacteur une température des boues de l'ordre de 35°C pondérée à plus ou moins 25%. Ce maintien à température de l'ordre de 35°C vise d'une part à liquéfier les matières grasses et d'autre part à maintenir les micro-organismes à une température optimisant les réactions de dégradation recherchées. Il est apparu que la température de 35°C relevait d'un compromis satisfaisant au regard de ces deux résultats recherchés.
- appliquer une durée de séjour des boues à l'intérieur du bioréacteur de l'ordre de 4,5 jours par m³ de boues acheminées pondérée à plus ou moins 25%.

L'opération d'acheminement des boues pâteuses comprend avantageusement l'opération de broyage des déchets gras à une grosseur prédéterminée. Une telle opération d'acheminement est par exemple réalisée par l'intermédiaire d'une pompe équipée de moyens de broyage. L'acheminement réalisé est susceptible d'être effectué à partir d'un réseau d'alimentation en déchets en provenance soit directement de la structure industrielle de production des déchets, soit d'une installation annexe de stockage et/ou de traitement préalable de ces déchets.

L'opération de maintien homogène des boues à l'intérieur de la cuve du bioréacteur est préférentiellement réalisée à l'intérieur de cette cuve, notamment à partir d'une agitation mécanique des boues directement à l'intérieur de la cuve du bioréacteur. Une telle agitation directe des boues dans le milieu de réaction favorise la probabilité de rencontre entre les déchets gras et les micro-organismes de la composition bactérienne. Cette agitation est par exemple effectuée par des moyens de brassage mécaniques.

De préférence, le maintien de l'oxygénation des boues à l'intérieur de la cuve du bioréacteur consiste plus particulièrement à opérer un apport d'oxygène à l'intérieur de la cuve de l'ordre de 4,5 mg par litre de boues traitées pondéré à plus ou moins 25%. On relèvera le taux particulièrement faible de la quantité d'oxygène apportée, suffisant pour la mise en oeuvre de la composition bactérienne de l'invention maintenue à une température sensiblement constante de 35°C.

Le procédé de traitement comprend préférentiellement l'opération de mesure en continu de l'un quelconque au moins des paramètres physico-chimiques des boues traitées à l'intérieur du bioréacteur, comprenant au moins notamment la température, le pH et le potentiel rédox, et du niveau des boues à l'intérieur de la cuve.

En cas de modification de l'un quelconque des paramètres physico-chimiques au-delà de seuils de consigne, le procédé de traitement comprend avantageusement l'une quelconque au moins des opérations consistant en la mise en oeuvre de moyens d'alerte et consistant en la mise en oeuvre de moyens de commande pour l'ajustement des paramètres physico-chimiques des boues.

De préférence, la mise en oeuvre des dits moyens de commande consiste plus particulièrement à effectuer l'une quelconque au moins des opérations comprenant la mise en oeuvre de moyens d'oxygénation, la mise en oeuvre de moyens de thermorégulation et la mise en oeuvre de moyens d'agitation. Le procédé aérobie mis en oeuvre permet un fonctionnement du bioréacteur avec un apport faible en oxygène réalisable à partir de l'air ambiant. Un tel fonctionnement est efficacement obtenu sans pour autant induire une croissance importante de la population bactérienne de la composition, avec pour conséquence avantageuse d'éviter une accumulation préjudiciable de biomasse. En outre, nonobstant la charge importante des boues en matière grasse, le procédé mis en oeuvre ne nécessite pas d'apport substantiel d'un liquide de dilution, de sorte que l'exploitation de la capacité de la cuve du bioréacteur est optimisée, avec pour avantage de faibles coûts de conception et de fonctionnement de l'installation pour un volume donné de matières grasses à traiter.

A titre indicatif, le procédé de dégradation mis en oeuvre permet l'obtention d'un mélange dégraissé évacué hors du bioréacteur présentant une DCO de 2 000 mg/l pour une boue pâteuse initiale de 200 000 mg/l. Le cas échéant, un tel mélange dégraissé est apte à être ensuite traité dans une installation habituelle de traitement d'effluents liquides.

### EXEMPLE 1 : Composition bactérienne

Un cocktail de microorganismes est préparé, comprenant les espèces suivantes :
- *Pseudomonas aeruginosa :* 10% et *Pseudomonas nitroreducens :* 10 %
- *Shewanella putrefaciens :* 20%
- *Morganella morganii:* 20%
- *Myroides odoratus :* 20%
- *Citrobacter freundii :* 20%

Le cocktail est réhydraté et est introduit dans le bioréacteur. Les boues à traitées sont alors introduites à leur tour selon le protocole décrit.

### EXEMPLE 2 : Installation et mise en oeuvre du traitement des boues

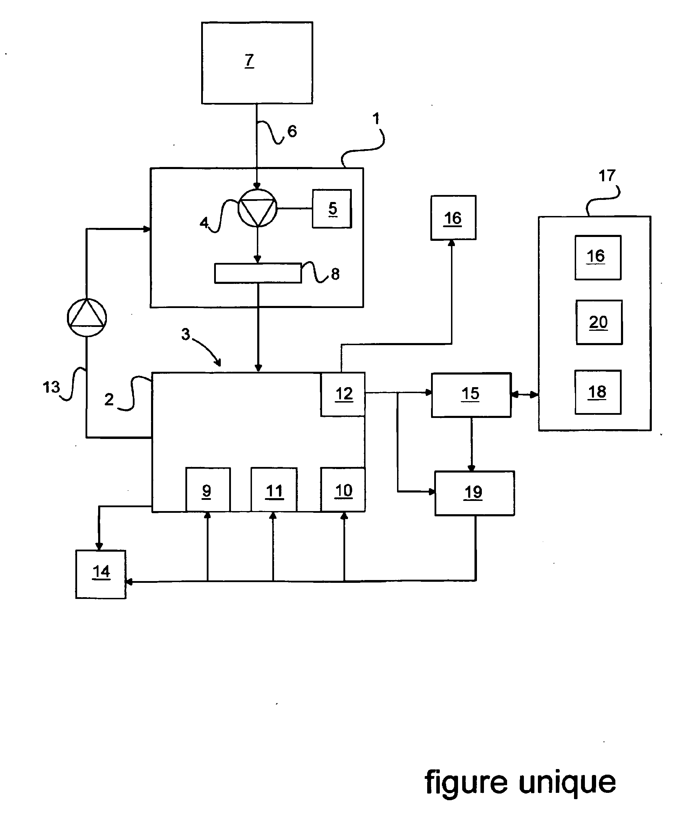

La figure unique représente une vue schématique d'un exemple préféré de réalisation d'une installation mettant en oeuvre un procédé de traitement de boues pâteuses de la présente invention. Pour chaque étape du procédé revendiqué sont décrits des moyens de leur réalisation.

Cette installation comprend :
- des moyens d'amenée 1, à l'intérieur de la cuve 2 d'au moins un bioréacteur 3, de boues chargées en matériau d'une dimension de taille prédéterminée. Ces moyens d'amenée 1 mettent notamment en oeuvre une pompe 4, préférentiellement broyeuse ou associée à des moyens de broyage 5, en relation avec une conduite d'alimentation 6 en provenance d'une source 7 des boues à traiter. Une telle source 7 est susceptible d'alimenter l'installation en continu. Ces moyens d'amenée 1 comprennent en outre des moyens de filtration 8, tels qu'un tamis rotatif, placés en amont du bioréacteur 3.
- ledit bioréacteur 3 au moins, celui-ci étant équipé de moyens d'agitation 9 des boues, de moyens d'oxygénation 10 des boues par apport d'un gaz, de moyens thermiques 11 de maintien des boues à une température de consigne, de moyens de mesure 12 de l'un quelconque des paramètres physico-chimiques des boues traitées à l'intérieur du bioréacteur 3 comprenant au moins la température, le pH et le potentiel rédox, et du niveau des boues à l'intérieur de la cuve 2. Les moyens d'agitation 9 sont notamment constitués de moyens de brassage mécanique équipant la cuve 2 du bioréacteur 3, en vue de l'homogénéisation des boues, voire de leur oxygénation. L'apport d'oxygène étant susceptible d'être relativement faible, le gaz d'apport des moyens d'oxygénation 10 est avantageusement l'air ambiant. Les moyens thermiques 11 sont quant à eux notamment constitués de moyens de chauffage, du type par exemple mettant en oeuvre un circuit annexe de circulation de fluide et/ou mettant en oeuvre des résistances électriques. Le bioréacteur 3 est préférentiellement disposé dans un milieu de confinement le préservant des variations climatiques, tel qu'un bâtiment dédié. La cuve 2 est préférentiellement formée à partir d'un matériau thermiquement isolant et/ou d'un matériau résistant aux substances corrosives susceptibles d'être produites par les réactions biochimiques. Il est apparu qu'un compromis satisfaisant entre ces deux caractéristiques recherchées était de former la cuve 2 en inox ou en résine, une telle cuve étant éventuellement extérieurement revêtue d'un matériau isolant.
- accessoirement des moyens de circulation 13 des boues entre des moyens de filtration et la cuve 2 du bioréacteur 3. Ces moyens de filtration sont notamment ceux 8 participant des moyens d'amenée 1.
- des moyens d'évacuation 14 des boues traitées hors du bioréacteur 3.

Les moyens d'amenée 1 et les moyens d'évacuation 14 sont avantageusement des moyens de circulation en continu des boues à travers l'installation suivant un débit correspondant à un séjour moyen de l'ordre de 4 à 5 jours.

Les moyens de mesure 12 sont préférentiellement associés à l'un quelconque de moyens 15 de communication distante d'informations, de moyens de transcription 16 des mesures effectuées et de moyens d'alerte 20. Les moyens de transcription 16 sont par exemple des moyens d'affichage des informations, des moyens de mémoire, et/ou des moyens d'impression. De tels moyens de transcription 16 sont susceptibles d'être localisés sur le site de l'installation et/ou d'être en relation avec les moyens de communication 15 pour être localisés à distance de l'installation. Les moyens d'alerte 20 sont indifféremment des moyens d'alerte visuelle et/ou sonore, préférentiellement localisés à distance de l'installation. Ces dispositions visent à permettre un contrôle continu du fonctionnement de l'installation, notamment à partir d'un centre de gestion distant 17, doté notamment des moyens de transcription 16 et/ou des moyens d'alerte 20, voire de moyens de pilotage 18 de moyens de commande 19 que comprend l'installation.

L'installation comprend de préférence les dits moyens de commande 19, pour la mise en oeuvre des moyens d'agitation 9 des boues, des moyens d'oxygénation 10 des boues par apport d'un gaz et des moyens thermiques 11 de maintien des boues à une température de consigne. La mise en oeuvre des moyens de commande 19 est placée sous la dépendance de l'un quelconque au moins des moyens de mesure 12 et des moyens de pilotage 18 par l'intermédiaire des moyens de communication distante 15.

### EXEMPLE 3

La composition bactérienne telle que décrite à l'exemple 1 a été utilisée pour le traitement de boues chargées en matières grasses provenant de différentes structures industrielles, par le procédé décrit à l'exemple 2. Les conditions opératoires étaient les suivantes :
- Volume total du bioréacteur : 6 m³
- Volume quotidien à traiter : 0,8 à 1,0 m³/j
- Alimentation initiale du bioréacteur : 2,5 m³ de graisses + 2,5 m³ d'eau

Le rendement de traitement des déchets est contrôlé à différents moments au cours du fonctionnement du réacteur par mesure en entrée et en sortie de l'installation de la demande chimique en oxygène (DCO) selon la norme NFT 90 101, de la matière en suspension (MES) selon norme EN 872, et la matière extractible à l'hexane (MEH) selon norme NFT 90 202. Les résultats obtenus sont présentés dans les tableaux suivants :

**Tableau 1**

| **Déchets issus d'un site de production de nourriture animale** | | | | | |
|---|---|---|---|---|---|
| Entrée | | Sortie | | **Rendement** | |
| DCO | MEH | DCO | MEH | **DCO** | **MEH** |
| mg/l | mg/l | mg/l | mg/l | **%** | **%** |
| 155000 | 203000 | 29900 | 5550 | **80,7** | **97,3** |
| 231000 | 63100 | 21500 | 2860 | **90,7** | **95,5** |
| 208000 | 22900 | 27400 | 2750 | **86,8** | **88,0** |

**Tableau 2**

| **Abattoir de volailles** | | | | | | | | |
|---|---|---|---|---|---|---|---|---|
| **DCO** | | | **MES** | | | **MEH** | | |
| Entrée | Sortie | **Rdt** | Entrée | Sortie | **Rdt** | Entrée | Sortie | **Rdt** |
| mg/l | mg/l | **%** | mg/l | mg/l | **%** | mg/l | mg/l | **%** |
| 11100 | 479 | **95,7** | 8208 | 117 | **98,6** | 3020 | 76 | **97,5** |
| 6050 | 2250 | **62,8** | 2540 | 147 | **94,2** | 1240 | 210 | **83,1** |
| 6490 | 1960 | **69,8** | 5556 | 620 | **88,8** | 3888 | 171 | **95,6** |
| 8340 | 1590 | **80,9** | 5692 | 288 | **94,9** | 2720 | 164 | **94,0** |
| 14100 | 1490 | **89,4** | 14216 | 250 | **98,2** | 10400 | 112 | **98,9** |
| 21300 | 1850 | **91,3** | 8900 | 320 | **96,4** | 1500 | 35 | **97,7** |
| 99600 | 2500 | **97,5** | 38716 | 166 | **99,6** | 13200 | 49 | **99,6** |

**Tableau 3**

| **Abattoir de poissons** | | | | | | | | |
|---|---|---|---|---|---|---|---|---|
| Entrée en mg/l | | | Sortie en mg/l | | | **Rendement %** | | |
| MES | DCO | MEH | MES | DCO | MEH | **MES** | **DCO** | **MEH** |
| 96473 | 39900 | 112000 | 4777 | 20200 | 1790 | **95,0** | **49,4** | **98,4** |

**Tableau 4**

| **Abattoir de porcs** | | | | | |
|---|---|---|---|---|---|
| Entrée en mg/l | | Sortie en mg/l | | **Rendement %** | |
| DCO | MEH | DCO | MEH | **DCO** | **MEH** |
| 173000 | 39000 | 134000 | 1500 | **22,5** | **96,2** |

**Tableau 5**

| **Abattoir de bovins** | | | | | | | | |
|---|---|---|---|---|---|---|---|---|
| **DCO** | | | **MEH** | | | **MES** | | |
| Entrée | Sortie | **Rendement** | Entrée | Sortie | **Rendement** | Entrée | Sortie | **Rendement** |
| mg/l | mg/l | **%** | mg/l | mg/l | **%** | mg/l | mg/l | **%** |
| 230550 | 19026 | **92** | 172540 | 17200 | **90** | 208000 | 300 | **98** |
| 198910 | 22597 | **89** | 138340 | 7600 | **95** | 191570 | 2635 | **99** |
| 174840 | 23948 | **86** | 68030 | 9450 | **86** | 81700 | 440 | **99** |

**Tableau 6**

| **Production de foie gras : DCO (mg/l)** | | |
|---|---|---|
| Entrée | Sortie | **Rendement** |
| 19 600 | 4 180 | **78,7%** |
| 72 000 | 4 520 | **93,7%** |
| 136 000 | 5200 | **96,2%** |
| 52 400 | 3 100 | **94,1%** |
| 180 000 | 5 800 | **96,8%** |
| 80 800 | 5 300 | **93,4%** |
| 115 200 | 5 500 | **95,2%** |

**Tableau 7**

| **Station d'épuration des eaux résiduaires urbaines** | | | | | |
|---|---|---|---|---|---|
| Entrée en mg/l | | Sortie en mg/l | | **Rendement %** | |
| DCO | MEH | DCO | MEH | **DCO** | **MEH** |
| 148500 | 180500 | 44200 | 9028 | **70,2** | **95,0** |
| 500200 | 65000 | 58900 | 8088 | **88,2** | **87,6** |
| 338700 | 86190 | 81700 | 500 | **75,9** | **99,4** |
| 118000 | 15734 | 55200 | 1971 | **53,2** | **87,5** |

Les résultats obtenus sont excellents : le taux de MEH en sortie montre que la quantité de graisses est réduit de plus de 90%, durant pratiquement toute la durée de fonctionnement du bioréacteur. Ceci est valable pour tous les effluents, quelle que soit l'origine des matières grasses qu'ils contiennent.

## Revendications

1. Composition bactérienne pour la dégradation de boues pâteuses fortement chargées en matières grasses d'origine animale, **caractérisée en ce qu'**elle comporte une association de souches bactériennes comprenant au moins une souche du genre *Pseudomonas,* au moins une souche du genre *Shewanella,* au moins une souche du genre *Morganella,* au moins une souche du genre *Myroides* et au moins une souche du genre *Citrobacter.*

2. Composition bactérienne selon la revendication 1, **caractérisée en ce que** les souches bactériennes associées sont en proportion équivalente pondérée à plus ou moins 25%.

3. Composition bactérienne selon l'une des revendications précédentes, **caractérisée en ce que** ladite au moins une souche du genre *Pseudomonas* est choisie parmi les souches de l'espèce *Pseudomonas aeruginosa* et de l'espèce *Pseudomonas nitroreducens.*

4. Composition bactérienne selon l'une des revendications précédentes, **caractérisée en ce que** ladite au moins une souche du genre *Shewanella* est choisie parmi les souches de l'espèce *Shewanella putrefaciens.*

5. Composition bactérienne selon l'une des revendications précédentes, **caractérisée en ce que** ladite au moins une souche du genre *Morganella* est choisie parmi les souches de l'espèce *Morganella morganii.*

6. Composition bactérienne selon l'une des revendications précédentes, **caractérisée en ce que** ladite au moins une souche du genre *Myroides* est choisie parmi les souches de l'espèce *Myroides odoratus.*

7. Composition bactérienne selon l'une des revendications précédentes, **caractérisée en ce que** ladite au moins une souche du genre *Citrobacter* est choisie parmi les souches de l'espèce *Citrobacter freundii.*

8. Application d'une composition bactérienne selon l'une quelconque des revendications précédentes pour le traitement de boues pâteuses chargées en matières grasses animales issues de l'industrie agro-alimentaire.

9. Application d'une composition bactérienne selon l'une quelconque des revendications 1 à 7 pour le traitement de boues pâteuses issues d'effluents produits par une collectivité territoriale.

10. Procédé de traitement de boues pâteuses chargées en matières grasses animales mettant en oeuvre une composition bactérienne selon l'une quelconque des revendications 1 à 7, **caractérisé en ce qu'**il consiste à réaliser successivement les étapes suivantes :
- acheminer les boues pâteuses vers la cuve (2) d'un bioréacteur (3) contenant une composition bactérienne selon l'une quelconque des revendications 1 à 7,
- filtrer les boues pâteuses pour séparer les déchets gras à traiter d'autres corps indésirables.
- maintenir à l'intérieur de la cuve (2) du bioréacteur (3) une homogénéisation et une oxygénation du milieu,
- maintenir à l'intérieur de la cuve (2) du bioréacteur (3) une température des boues de l'ordre de 35°C pondérée à plus ou moins 25%,
- appliquer une durée de séjour des boues à l'intérieur du bioréacteur (3) de l'ordre de 4,5 jours par m³ de boues acheminées, pondérée à plus ou moins 25%.

11. Procédé de traitement selon la revendication 10, **caractérisé en ce que** l'opération d'acheminement des boues pâteuses comprend l'opération de broyage des déchets gras à une grosseur prédéterminée.

12. Procédé de traitement selon l'une des revendications 10 ou 11, **caractérisé en ce que** l'opération de maintien homogène des boues à l'intérieur de la cuve (2) du bioréacteur (3) est réalisée à partir d'une agitation mécanique des boues directement à l'intérieur de la cuve (2) du bioréacteur (3).

13. Procédé de traitement selon l'une quelconque des revendications 10 à 12, **caractérisé en ce que** l'oxygénation des boues à l'intérieur de la cuve (2) du bioréacteur (3) consiste à opérer un apport d'oxygène à l'intérieur de la cuve (2) de l'ordre de 4,5 mg par litre de boues à traiter, pondéré à plus ou moins 25%.

14. Procédé de traitement selon l'une quelconque des revendications 10 à 13, **caractérisé en ce qu'**il comprend l'opération de mesure en continu de l'un quelconque au moins des paramètres physico-chimiques des boues traitées à l'intérieur du bioréacteur (3) comprenant au moins la température, le pH et le potentiel rédox, et du niveau des boues à l'intérieur de la cuve.

15. Procédé de traitement selon la revendication précédente, **caractérisé en ce que**, en cas de modification de l'un quelconque des paramètres physico-chimiques au-delà de seuils de consigne, il comprend l'une quelconque au moins des opérations consistant en la mise en oeuvre de moyens d'alerte (20) et de moyens de commande (19) pour l'ajustement des paramètres physico-chimiques des boues.

16. Procédé de traitement selon la revendication précédente, **caractérisé en ce que** la mise en oeuvre desdits moyens de commande (19) consiste à effectuer l'une quelconque au moins des opérations comprenant la mise en oeuvre de moyens d'oxygénation (10), la mise en oeuvre de moyens de thermorégulation (11) et la mise en oeuvre de moyens d'agitation (9).

## Claims

1. Bacterial compound pour breaking down pasty sludge with a high content of fats of animal origin, **characterised in that** it includes a combination of bacterial strains containing at least one strain of the genus *Pseudomonas,* at least one strain of the genus *Shewanella,* at least one strain of the genus *Morganella,* at least one strain of the genus *Myroides* and at least one strain of the genus *Citrobacter.*

2. Bacterial compound according to claim 1, **characterised in that** the associated bacterial strains are in equivalent proportions weighted at more or less 25%.

3. Bacterial compound according to one of the claims above, **characterised in that** at least one strain of the genus *Pseudomonas* is selected from among the strains of the species *Pseudomonas aeruginosa* and of the species *Pseudomonas nitroreducens.*

4. Bacterial compound according to one of the claims above, **characterised in that** at least one strain of the genus *Shewanella* is selected from among the strains of the species *Shewanella putrefaciens.*

5. Bacterial compound according to one of the claims above, **characterised in that** at least one strain of the genus *Morganella* is selected from among the strains of the species *Morganella morganii.*

6. Bacterial compound according to one of the claims above, **characterised in that** at least one strain of the genus *Myroides* is selected from among the strains of the species *Myroides odoratus.*

7. Bacterial compound according to one of the claims above, **characterised in that** at least one strain of the genus *Citrobacter* is selected from among the strains of the species *Citrobacter freundii.*

8. Application of a bacterial compound according to any one of the claims above for the treatment of pasty sludge containing animal fats originating in the food-processing industry.

9. Application of a bacterial compound according to any one of claims 1 to 7 for the treatment of pasty sludge originating in effluents produced by a local community.

10. Treatment method for pasty sludge containing animal fats involving a bacterial compound according to any one of claims 1 to 7, **characterised in that** it consists in performing the following steps in succession:
- to convey the pasty sludge to the tank (2) of a bioreactor (3) containing a bacterial compound according to any one of claims 1 to 7,
- to filter the pasty sludge in order to separate the fatty waste to be treated from other undesirable bodies,
- to maintain homogenisation and oxygenation of the environment inside the tank (2) of the bioreactor (3),
- to maintain a sludge temperature of about 35°C weighted at more or less 25% inside the tank (2) of the bioreactor (3),
- to apply to the sludge inside the bioreactor (3) a retention time of about 4.5 days per m³ of sludge conveyed, weighted at more or less 25%.

11. Treatment method according to claim 10, **characterised in that** the pasty sludge conveying operation includes the crushing of fatty waste down to a predetermined size.

12. Treatment method according to either of claims 10 or 11, **characterised in that** the operation consisting in keeping the sludge inside the tank (2) of the bioreactor (3) homogeneous is performed by mechanical stirring of the sludge directly inside the tank (2) of the bioreactor (3).

13. Treatment method according to any one of claims 10 to 12, **characterised in that** the oxygenation of the sludge inside the tank (2) of the bioreactor (3) consists in feeding oxygen inside the tank (2) in quantities of about 4.5 mg per litre of sludge to be treated, weighted at more or less 25%.

14. Treatment method according to any one of claims 10 to 13, **characterised in that** it includes the continuous measurement of at least one of any of the physical-chemical parameters of the sludge treated inside the bioreactor (3), including at least the temperature, pH and redox potential, and of the sludge level inside the tank.

15. Treatment method according to the claim above, **characterised in that**, in case of change in any one of the physical-chemical parameters beyond set thresholds, it includes at least one of the operations consisting in the start up of alarm devices (20) and of control devices (19) to adjust the physical-chemical parameters of the sludge.

16. Treatment method according to the claim above, **characterised in that** the start-up of said control devices (19) consists in performing at least one of the operations including the start-up of oxygenation devices (10), the start-up of thermoregulation devices (11) and the start-up of stirring devices (9).

## Patentansprüche

1. Bakterienzusammensetzung zum Abbau von pastösen Schlämmen, die einen hohen Gehalt an Fetten tierischer Herkunft aufweisen, **dadurch gekennzeichnet, dass** sie vergesellschaftete Bakterienstämme aufweist, die mindestens einen Stamm der Gattung *Pseudomonas,* mindestens einen Stamm der Gattung *Shewanella,* mindestens einen Stamm der Gattung *Morganella,* mindestens einen Stamm der Gattung *Myroides* und mindestens einen Stamm der Gattung Citrobacter umfassen.

2. Bakterienzusammensetzung nach Anspruch 1, **dadurch gekennzeichnet, dass** die vergesellschafteten Bakterienstämme in gleichen Anteilen mit Abweichungen von plus/minus 25 % vorliegen.

3. Bakterienzusammensetzung nach einem der vorhergehenden Ansprüche, **dadurch gekennzeichnet, dass** der mindestens eine Stamm der Gattung *Pseudomonas* aus den Stämmen der Art *Pseudomonas aeruginosa* und der Art *Pseudomonas nitroreducens* gewählt ist.

4. Bakterienzusammensetzung nach einem der vorhergehenden Ansprüche, **dadurch gekennzeichnet, dass** der mindestens eine Stamm der Gattung *Shewanella* aus den Stämmen der Art *Shewanella putrefaciens* gewählt ist.

5. Bakterienzusammensetzung nach einem der vorhergehenden Ansprüche, **dadurch gekennzeichnet, dass** der mindestens eine Stamm der Gattung *Morganella* aus den Stämmen der Art *Morganella morganii* gewählt ist.

6. Bakterienzusammensetzung nach einem der vorhergehenden Ansprüche, **dadurch gekennzeichnet, dass** der mindestens eine Stamm der Gattung *Myroides* aus den Stämmen der Art *Myroides odoratus* gewählt ist.

7. Bakterienzusammensetzung nach einem der vorhergehenden Ansprüche, **dadurch gekennzeichnet, dass** der mindestens eine Stamm der Gattung *Citrobacter* aus den Stämmen der Art *Citrobacter freundii* gewählt ist.

8. Anwendung einer Bakterienzusammensetzung nach einem beliebigen der vorhergehenden Ansprüche zur Behandlung pastöser Schlämme, die tierische Fette enthalten, welche aus der Lebensmittelindustrie stammen.

9. Anwendung einer Bakterienzusammensetzung nach einem beliebigen der Ansprüche 1 bis 7 zur Behandlung pastöser Schlämme, die aus kommunalen Abwässern stammen.

10. Verfahren zur Behandlung pastöser Schlämme, die tierische Fette enthalten, wobei eine Bakterienzusammensetzung nach einem beliebigen der Ansprüche 1 bis 7 zur Anwendung kommt, **dadurch gekennzeichnet, dass** es darin besteht, die folgenden Schritte nacheinander durchzuführen:
- Einleiten der pastösen Schlämme in den Behälter (2) eines Bioreaktors (3), der eine Bakterienzusammensetzung nach einem beliebigen der Ansprüche 1 bis 7 enthält.
- Filtrieren der pastösen Schlämme, um die zu behandelnden fettigen Abfallstoffe von sonstigen unerwünschten Körpern abzutrennen.
- Aufrechterhalten einer Homogenisierung und einer Sauerstoffversorgung des Milieus im Inneren des Behälters (2) des Bioreaktors (3),
- Aufrechterhalten einer Schlammtemperatur in der Größenordnung von 35 °C plus/minus 25 % im Inneren des Behälters (2) des Bioreaktors (3),
- Anwenden einer Verweildauer der Schlämme im Inneren des Bioreaktors (3), die pro m³ an eingeleitetem Schlamm in der Größenordnung von 4,5 Tagen plus/minus 25 % liegt.

11. Behandlungsverfahren gemäß Anspruch 10, **dadurch gekennzeichnet, dass** der Vorgang des Einleitens der pastösen Schlämme den Vorgang des Zerkleinerns der fettigen Abfallstoffe bis zu einem zuvor festgelegten Feinheitsgrad umfasst.

12. Behandlungsverfahren nach einem der Ansprüche 10 oder 11, **dadurch gekennzeichnet, dass** der Vorgang des Homogenhaltens der Schlämme im Inneren des Behälters (2) des Bioreaktors (3) ausgehend von einem mechanischen Rühren der Schlämme direkt im Inneren des Behälters (2) des Bioreaktors (3) durchgeführt wird.

13. Behandlungsverfahren nach einem beliebigen der Ansprüche 10 bis 12, **dadurch gekennzeichnet, dass** die Sauerstoffversorgung der Schlämme im Inneren des Behälter (2) des Bioreaktors (3) darin besteht, im Inneren des Behälters (2) des Bioreaktor (3) eine Sauerstoffzufuhr in der Größenordnung von 4,5 mg plus/minus 25 % pro Liter an zu behandelnden Schlämmen durchzuführen.

14. Behandlungsverfahren nach einem beliebigen der Ansprüche 10 bis 13, **dadurch gekennzeichnet, dass** es den Vorgang des kontinuierlichen Messens mindestens eines beliebigen der physikalisch-chemischen Parameter der Schlämme, die im Inneren des Bioreaktors (3) behandelt werden, umfasst, wobei diese mindestens die Temperatur, den pH-Wert, das Redoxpotential und den Schlammspiegel im Inneren des Behälters umfassen.

15. Behandlungsverfahren nach dem vorhergehenden Anspruch, **dadurch gekennzeichnet, dass** es, im Falle einer Veränderung eines beliebigen der physikalisch-chemischen Parameter über die Schwellenwerte des Sollzustands hinaus, mindestens einen beliebigen der Vorgänge umfasst, die darin bestehen, Warnmittel (20) und Steuermittel (19) einzusetzen, um die physikalisch-chemischen Parameter einzustellen.

16. Behandlungsverfahren nach dem vorhergehenden Anspruch, **dadurch gekennzeichnet, dass** der Einsatz der Steuermittel (19) darin besteht, mindestens einen beliebigen der Vorgänge durchzuführen, die den Einsatz von Sauerstoffversorgungsmitteln (10), den Einsatz von Wärmeregulierungsmitteln (11) und den Einsatz von Rührmitteln (9) umfassen.
